# EUROPEAN PATENT APPLICATION

(11) **EP 0 857 556 A1**
(43) Date of publication of application: **12.08.1998**
(21) Application number: 98100180.3
(22) Date of filing: 08.01.1998
(51) Int. Cl.: B29C 44/56

(54) **Process and apparatus for manufacturing a shaped composite panel**

(30) Priority: 10.01.1997 IT SV970002
(71) Applicant: G.O.R. Applicazioni Speciali S.p.A., 10060 Buriasco, Torino (IT)
(72) Inventor: Odino, Adriano, 10060 Angrogna (TO) (IT)
(74) Representative: Karaghiosoff, Giorgio Alessandro, Dipl.-Phys.

(57) **Abstract**

Process for manufacturing composite panels made of thermoformable plastic, comprising at least one layer made of foamed thermoformable material (1), and at least one layer made of compact, that is non foamed, thermoformable material (2). The process provides that the layer of compact material (2) is applied onto a preformed panel of foamed material (1), by heating at least the layer of compact material (2) and by exerting compression with a predetermined force, such as to avoid compaction, that is modification of the characteristics of the foamed material (1). According to the invention, along the peripheral edges (5) and/or along the edges of interior apertures, the superimposed layers (1, 2) are compressed to a greater extent than the other areas, in such a way as to compact the foam layer (1) on its application onto the compact layer (2). The invention also relates to an apparatus for performing the process and to a panel produced through the said process.

## Description

The invention relates to a process for manufacturing composite panels made of thermoformable plastic, comprising at least one layer made of foamed thermoformable material, and at least one layer made of thermoformable material in the form of a compact, that is non foamed, sheet, the said process providing the following stages:
(a) manufacturing a former panel from foamed thermoplastic material;
(b) applying the layer of compact thermoformable material onto the shaped panel made of foamed thermoplastic material by heating at least the layer of compact thermoformable material, and by exerting compression with a predetermined force, such as to avoid compaction, that is modification of the characteristics of the foamed thermoplastic material, onto the preformed panel made of foamed thermoplastic material.

In prior art processes of this type, the application of the coating sheet made of compact thermoplastic material usually takes place in a mold which is shaped in such a way as to be substantially complementary to the preformed panel made of foamed material. The compressive force is such as to avoid modifications, particularly excessive compaction of the preformed panel made of foamed material, and as to obtain a nearly homogeneous compression, all over its surface.

This technique achieves good results, but is affected by drawbacks, implied by the finish of perimeter edges, or edges of eventual interior apertures. This is due to the fact that, especially for relatively thin panels, the preformed panel made of foamed material has no perfectly sharp and clean peripheral edges. Particularly, this drawback occurs when the preformed panel made of foamed material is produced through a technique providing pellets of foamed material be injected into a mold and then welded, melted or anyway joined together by letting in a hot fluid, like hot water, steam, or else. In this case, pellets hardly penetrate the relatively thin areas of the perimeter edges, therefore the preformed panel made of foamed material has irregular edges, in which pellets are anyway not perfectly joined together.

The invention is intended to provide a process of the type described hereinbefore, through which, thanks to simple and relatively cheap expedients, it is possible to obtain shaped and formed panels like those specified above, whose perimeter edges or edges of interior apertures are perfectly finished, sharp and clean.

The invention achieves the above stated objects by providing a process of the type described hereinbefore, wherein, along the peripheral edges, the superimposed layers made of foamed material and of compact material are provided with a differentiated compression with respect to the other areas, particularly a compression with higher compressive forces, such as to compact the foam layer on its application onto the layer of compact material.

Preferably, along the said peripheral areas, the higher and differentiated compression is provided while heating the areas along the peripheral edge and/or along the edges of interior apertures.

When the interior areas of the panel are also heated, the peripheral edges or the edges along eventual interior apertures are provided with differentiated heating with respect to the said remaining areas, and to higher temperatures.

Preferably, the process provides for thermal insulation between the heat sources in the areas along the peripheral edges or the edges of interior apertures, in which compaction is needed, and those in the interior areas of the panel, in which the two layers are only to be anchored to each other, without any substantial modification of the characteristics, especially of the foamed material.

The heating temperatures provided in the areas along the peripheral edges or the edges of eventual interior apertures are between 30 and 150° C, preferably between 80 and 250° C.

A further enhancement of the inventive process provides, in combination with the differentiated compression of the areas along the peripheral edges and along the edges of eventual interior apertures and/or with the differentiated heating to higher temperatures in the said areas, also the finishing cut of the said edges, preferably being substantially simultaneous therewith.

The cutting means may also be heated and may consist of shearing blades with continuous or saw-edged knife and counter-knife, or of die cutting punches, eventually heated, and with different punch configurations, either continuous, or saw-edged.

Thanks to the above described expedients, the formed panel, being composed of the layer of foamed material, and of the layer of compact material has perfectly sharp, clean and resistant edges. The higher compressive force and the eventually combined heating to higher temperatures than in the rest of the panel involves compaction of the foamed material, which substantially loses its characteristics, and is bound to the peripheral edge of the compact layer, providing said edge with a good resistance and finish. The finishing cut, when substantially simultaneous therewith, and eventually performed by heated means, further improves the finish of the edges of the panel.

All this is achieved through simple process steps, which do not imply any lengthening or excessive complication of the process, and may be easily integrated in the process steps for applying the two layers onto each other. Therefore, to perform the inventive process, no additional step is to be executed separately from those leading to mutual fixing of the two layers.

Amongst foamed thermoformable materials it is possible to use foams based on thermoplastic resins, particularly polyolefin resins, especially polypropylene-based.

As for the compact layer, it is possible to use materials either based on vegetable and/or mineral fibers, or based on synthetic fibers and/or thermoplastic resins. The said fibers may be used both separately and in combination, and may be for example paper, crepe paper, woven or non-woven textiles, felts, mat, sheets of thermoplastic materials, either pure or filled with aggregate, such as wood flour, and/or talc, or similar, imitation leathers, or similar.

A particular embodiment provides that the layer of compact material is a thin sheet of thermoplastic resin, filled or not, particularly of polyolefin resin, especially of polypropylene.

The invention also relates to an apparatus for manufacturing a composite panel made of thermoformable material according to the process described hereinbefore, comprising a mold and a complementary counter mold which are shaped according to the final shape of the composite panel, which substantially corresponds to the shape of the preformed layer of foamed material, the said mold and counter mold being made in such a way that, in the closing condition, they exert a compression of the preformed layer of foamed material against the layer of compact material, being sufficient to provide coupling between the said two layers, but not to modify the characteristics of the foamed material.

According to the invention, at least the mold part, and/or also the counter mold part have, in the areas or strips along the perimeter edges and/or along the edges of eventual interior apertures, protruding areas for higher compression on the two layers of foamed material and of compact material, the said protruding areas of the mold and/or counter mold being made to be so thick as to compress the two layers to such an extent as to compact the layer of foamed material in the area coinciding therewith.

The shaping of the mold and of the counter mold is such that, in the compressing position, the distance between the working surfaces of the mold and counter mold is slightly longer than the total thickness of the two superimposed layers, i.e. the layer of preshaped foamed material and the layer of compact material, whereas, in the areas along the peripheral edges and/or along the edges of eventual interior apertures, the distance between the mold and the counter mold is definitely shorter than the total thickness of the foamed material and the layer of compact material.

Preferably, the said protruding areas of the mold and/or of the counter mold are shaped in such a way as to converge on each other, and are profiled in any way, even differently from each other towards the edge of the panel composed of the layers of foamed material and of compact material, whereas in the area in which the distance is shorter, the two protruding portions of the mold and counter mold are at a distance which is in the same order of magnitude as the thickness of the compact material.

According to an enhancement, the protruding areas of the mold and/or counter mold, provided along the portions of the mold and/or counter mold coinciding with the outer peripheral edges or with the edges of interior apertures, are provided in heated portions of the mold and counter mold.

Advantageously, the said heated portions are thermally insulated from the rest of the mold, which may be also heated or not.

According to a further characteristic, the portions of the mold and/or counter mold coinciding with the areas of the composite panel along its peripheral edges and/or along the edges of interior apertures, simultaneously carry means for shearing or trimming peripheral edges, or edges of eventual interior apertures, which are automatically driven by closing the mold against the counter mold.

The invention also relates to a shaped panel composed of at least one layer of foamed thermoformable material and of at least one layer of compact, that is non foamed thermoformable material, which are coupled, the layer of foamed material being compacted, in the area of the panel along the peripheral edges or along the edges of eventual interior apertures, against the layer of non foamed material, in such a way as to substantially lose the typical characteristics of a foamed structure.

Advantageously, the compaction of the foamed material is progressive from an inner point, in which it substantially equals zero towards the outside, until it reaches the highest values at the free peripheral edge or at the edge of an interior aperture of the panel.

Particularly, along the peripheral edge, or along the edge of interior apertures, the total thickness of the panel varies from a maximum, which substantially corresponds to the total thickness of the foamed layer and of the layer of compact material, to a minimum, whose order of magnitude substantially corresponds to the thickness of the layer of compact material.

The invention also has additional improvements, which form the subject of the dependent claims.

The characteristics of the invention will appear more clearly from the following description of a non limiting example illustrated in the annexed drawings, in which:
Fig. 1 is a diagrammatic sectional view of a first embodiment of an apparatus for manufacturing the panel according to the invention, consisting of a mold and a counter mold, in the opened position.
Fig. 2 is a view similar to that of fig. 1, the mold and the counter mold being in the closed position.
Fig. 3 is a view similar to those of the preceding figures, but of a viariant embodiment of the apparatus according to the invention, for manufacturing a thermoformed panel.
Fig. 4 is a magnified view of a particular corresponding to the peripheral edge area of a panel made with the inventive method and apparatus.

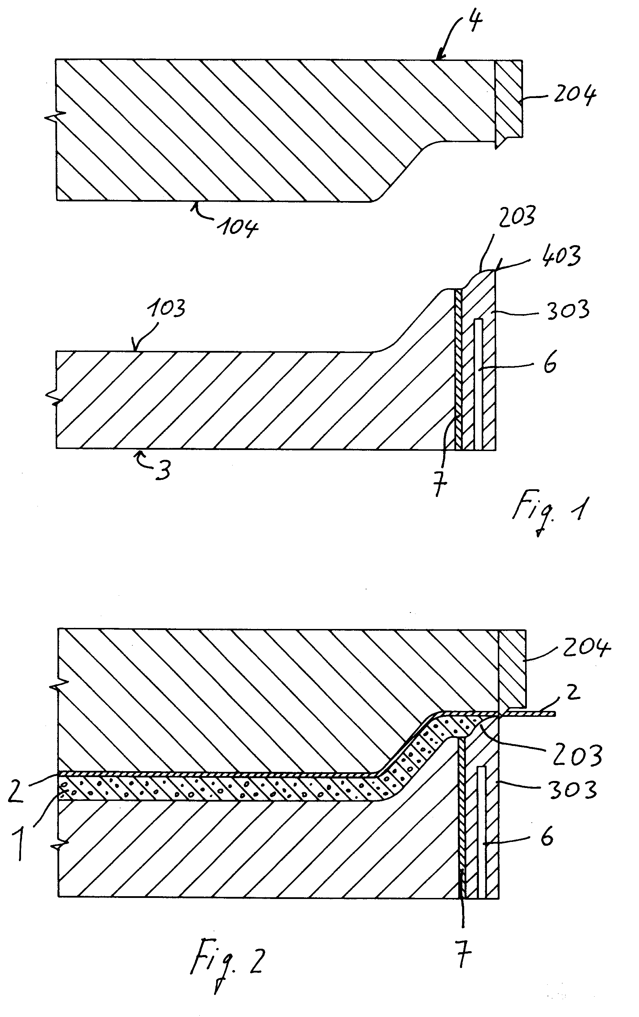

Referring to figures 1 and 2, an apparatus for manufacturing a composite panel made of thermoformable material, comprises a mold and a counter mold, which are used for coupling a first preformed layer 1, made of foamed thermoplastic material, and a relatively thin layer 2 made of compact, that is non foamed, material.

The layer of foamed material 1 is preferably made of a thermoplastic resin or a mixture of thermoplastic resins, especially of a polyolefin-based resin. Advantageously the polyolefin resin is made of polypropylene.

The layer of compact thermoformable material may be made of materials either based on vegetable and/or mineral fibers, or based on synthetic fibers and/or thermoplastic resins. These fibers and components may be provided both separately and in combination, in the form of mixtures. For example, the layer of compact material may be made of paper, crepe paper, woven or non-woven textiles, felts, mat, sheets of thermoplastic materials, either pure or filled with aggregate, such as wood flour, and/or talc, or similar, imitation leathers, or similar.

A particular embodiment provides that the layer of compact material is a thin sheet of thermoplastic resin, filled or not, particularly of polyolefin resin, especially of polypropylene.

Eventually, when very thin films are used, the latter may be applied through coextrusion onto supporting layers, which are meant to form an intermediate anchor layer between the layer 2 and the layer of foamed material 1.

The layer 1 of thermoplastic material is preformed and is inserted between the mold and the counter mold 3, 4, together with the compact layer 2.

The mold and the counter mold 3, 4 are shaped in such a way as to match the preformed panel of foamed material 1, and their stroke causes the layer of foamed material 1 to be compressed to such an extent that it does not lose its typical characteristics, particularly to such an extent that it is not even partially compacted, but so that it may be coupled to the superimposed layer 2 of compact material. Obviously, this condition of calibrated compression corresponds to a relative position of the mold 3 and the counter mold 4, wherein their respective complementary working surfaces 103, 104 are at a predetermined minimum distance from each other, in the position of maximum approach of the mold 3 to the counter mold 4. This minimum distance is substantially in the same order of magnitude as the total thickness of the two layers 1, 2 made of foamed and compact materials respectively.

Coinciding with a strip 5, extending along the peripheral edge and eventually along the edges of possible interior apertures provided in the panel, one or both mold and/or countermold parts, - in the example only the mold part - have a particular shaping, which allows for a higher compressive force onto the two layers 1, 2, such that the layer of foamed material is compacted, thus forming a peripheral edge of the composite panel, in the form of a relatively rigid rib, and with a sharp, clean and accurate finish.

Particularly, as shown in figures, the higher compression in the peripheral strip of the composite panel is obtained by providing a protruding portion 203, in the direction of the counter mold, along the peripheral area of the mold 3. This protruding portion 203 reduces, coinciding therewith, the minimum distance between the mold 3 and the counter mold 4, in the position of maximum approach between the said two parts, so that the said distance becomes definitely shorter than the total thickness of the two layers 1, 2 made of foamed material and of compact material, in the said strip, and preferably in the same order of magnitude as the thickness of the layer of compact material 2. By this shaping, in the closing condition of the mold 3 and of the counter mold 4, that is in the condition of maximum approach between them, the strip 5 along the peripheral edge of the two superimposed layers 1, 2 is provided with a higher squeezing than the rest of the composite panel, and to such an extent as to provide the compaction of the layer of foamed material and the forming of a compact peripheral edge, having a clean, sharp and accurate profile.

According to an enhancement, the projection 203, extending all along the peripheral edge of the mold 1 and eventually along the edges of possible interior apertures of the panel, is profiled in such a way, as to generate a progressively higher compression as the peripheral edge is approached, starting from the minimum compression, provided for simple coupling between the two layers 1, 2, and reaching a maximum compression provided to obtain compaction of the foam layer 1, while fixing it onto the layer 2 of compact material.

All this may be achieved by providing the projection 203 with a profile which, when seen in section, is inclined upwards from a predetermined inner starting line, towards the peripheral edge of the mold.

The inclination, as well as the profile of the compressing inclined surface, of the projection 203, may be of any type, according to requirements of appearance and use of the composite panel.

With reference to the illustrated example, the inclined surface of the projection 203 is made in the form of a convex arch, thus providing a peripheral edge in the form of a concave arch in the panel. Thanks to this profile, an accurate compacting progression may be obtained, which is more rapid in the inner portion of the area 5, whereas it is substantially constant in the outer portion, once it has reached a predetermined value.

The area of higher and notable compression onto the layer 1 of foamed material along the peripheral edge of the panel is wider than it would be with a plane inclined surface.

The mold and/or counter mold may be heated or not. The layer of compact material 2 may be also pre-heated prior to its insertion between the mold and the counter mold, whether one or both of them are heated or not.

The area or areas of the mold and/or counter mold corresponding to the compacting projections 203, are preferably provided with differentiated heating from the rest of the mold and are particularly supplied with separate heating means 6. Since the heating action is intended to enhance the stronger compressive action along the peripheral edges of the panel, or along the edges of eventual interior apertures, in order to obtain the desired compaction of the foam layer 1 along the said edges, heating is only provided on that peripheral strip 5, along the edges of the panel, or anyway, when the rest of the mold is also heated, reaching definitely higher temperatures, between 30 and 250°C, preferably between 80 and 170°C.

To prevent heat from propagating out of the peripheral portions of the mold and/or counter mold 303, associated to the projection 203, the said peripheral portions of the mold 3, that is those portions 303 carrying the projection 203, and having separate heating means 6, are separated from the rest of the mold and/or counter mold 3, 4, associated to the areas of the panel in which the layer of foamed material 1 must not be compacted, by a thermal barrier 7, that is by an intermediate layer made of thermoinsulating material.

The said portions 303 may be made to be removable elements, which may be fixed to the rest of the mold 3 or counter mold 4, like a frame, or similar.

According to a further characteristic, contributing to the finishing of the peripheral edges of the panel, so as to obtain sharp, clean and accurate edges, besides compaction of the strip 5 along the peripheral edges through a higher compression and/or heating, the mold 3 and the counter mold 4 are also provided with means for cutting, or trimming the said peripheral edges.

The said means may be of any type, heated or not, integrated in or separated from the mold 3 and the counter mold 4.

In the embodiment shown in figs. 1 and 2, the counter mold 4 has a peripheral knife 204, cooperating with a counter knife of the mold 1, which is provided in coincidence with the outer peripheral edge of the projection 203. Particularly, the outer edge 403, formed by a lateral, substantially vertical wall, oriented in the direction of movement of the mold 3 and counter mold 4, and by the compressing surface of the projection 203, is the blade of the counter knife.

In this case, when the portion 303 of the mold, associated to the compacting projection 203 is heated, a further advantage is drawn by using a heated knife, whose action is coincident with the stroke for coupling the layers 1 and 2, and for compacting their peripheral edges. The knives may be also provided along the edges of interior apertures provided in the panel, with no variants in construction, with respect to the peripheral ones.

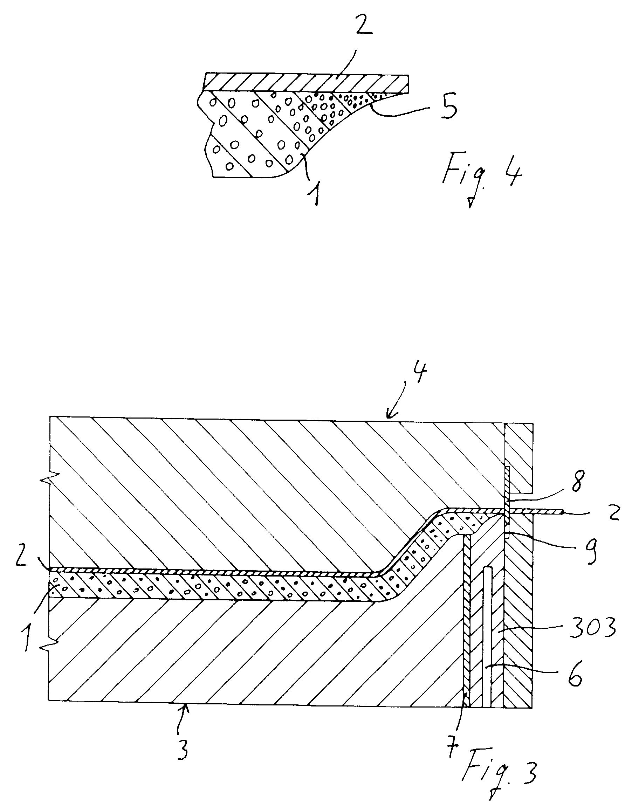

Alternatively to shearing trimming knives, there may be provided die cutting punches as illustrated in fig. 3. The counter mold 4 carries a punch 8, like a blade, projecting parallel to the direction of movement of the counter mold 4, and of the mold 3. The mold 3 has a coincident throat for engagement of the blade, designated by 9. The die cutting blade 8, and eventually the trimming blade 204 may be also eventually saw-edged, or similar.

Fig. 4 shows a particular of a panel according to the invention, comprising at least one layer 1, made of foamed thermoplastic material, particularly of polyolefin-based, especially polypropylene-based thermoplastic material, and at least one coating layer 2, made of compact thermoformable material.

As previously stated, the compact material may be made of sheets, woven or non-woven textiles, mat, films, or else, being made either of thermoplastic material, or of natural fibers, vegetable and/or mineral. These materials or these fibers may also be intermixed, and may be provided, according to their structure, either with variable granulometries and/or fiber lengths or at the plastic state. These materials may be for example paper, crepe paper, woven textiles, felts, mat, needled or not, non-woven textiles and sheets of thermoplastic resins, filled or not.

A particular embodiment provides that the layer 2 of compact material is made of a thin sheet based on polyolefin resins, preferably based on polypropylene. Polypropylene may be also filled with vegetable and/or mineral fibers, like wood dust, talc, or similar.

Eventually, the layer of compact material may be composed of at least two layers, there being provided a layer for supporting and/or anchoring the foam layer 1. The supporting and/or anchor layer may be of different types, according to the desired surface finishing type. It may be made of a thin film, preferably coextruded, either of compact material, or eventually of foamed material, and preferably of polypropylene.

The layer of foamed material 1 is also polyolefin-based and may be preformed or not. Special advantages may be drawn by using a layer of foamed material, made of foamed balls, which are solidarized in the mold and counter mold, through compression and immission of heated steam.

Along the peripheral edges and/or along the edges of eventual interior apertures, the panel has a strip 5, in which the layer of foamed thermoplastic material 1 is compacted on itself and on the layer of compact material 2 which covers it.

Preferably, the said strip 5 has a compaction degree which progressively increases from a level which substantially equals zero, in the innermost limit of the panel, up to a maximum level, in the outer edge of the panel.

Compaction may progress by linear or substantially quadratic or logarithmic increase. This is achieved by reducing the thickness of the panel from an extent substantially corresponding to the total thickness of the two layers 1 and 2, to a thickness substantially corresponding to that of the layer of compact material 2, the said peripheral strip having a countersunk concave profile.

Naturally, the invention is not limited to the embodiments described and illustrated herein, but may be varied, particularly as regards construction, without departure from the scope disclosed above and claimed below.

## Claims

**1.** Process for manufacturing composite panels made of thermoformable plastic, comprising at least one layer made of foamed thermoformable material (1), and at least one layer made of thermoformable material (2) in the form of a compact, that is non foamed, sheet, the said process providing the following stages:
(a) manufacturing a former panel from foamed thermoplastic material (1);
(b) applying the layer of compact thermoformable material (2) onto the shaped panel made of foamed thermoplastic material (1) by heating at least the layer of compact thermoformable material (2), and by exerting compression with a predetermined force, such as to avoid compaction, that is modification of the characteristics of the foamed thermoplastic material (1), onto the preformed panel made of foamed thermoplastic material (1), characterized in that
along the peripheral edges (5) and/or along the edges of interior apertures, the superimposed layers (1, 2) are provided with a differentiated compression with respect to the other areas, particularly with higher compressive forces, such as to compact the foam layer (1) on its application onto the layer of compact material (2), in order to form a peripheral edge and/or an edge of interior apertures, which is compact, sharp and accurate.

**2.** Process as claimed in claim 1, characterized in that along the said peripheral areas (5) or along the edge areas of interior apertures, the higher and differentiated compression is provided in combination with simultaneous heating (6).

**3.** Process as claimed in claims 1 or 2, characterized in that the areas (5) along the peripheral edges or along the edges of eventual interior apertures are provided with differentiated heating with respect to the said remaining areas, and to higher temperatures.

**4.** Process as claimed in one or more of the preceding claims, characterized in that it provides for thermal insulation (7) between the heat sources for heating the areas (5) along the peripheral edges or the edges of interior apertures, in which compaction is needed, and the eventual heat sources for the interior areas of the panel, in which the two layers (1, 2) are only to be anchored to each other, without any substantial modification of the characteristics, especially of the foamed material (1).

**5.** Process as claimed in one or more of the preceding claims, characterized in that the heating temperatures in the areas (5) along the peripheral edges, or along edges of eventual interior apertures are between 30 and 150°C, preferably between 80 and 250°C.

**6.** Process as claimed in one or more of the preceding claims, characterized in that, in the interior areas of the composite panel, in which no compaction of the foamed material (1) is needed, the heating action is limited to the layer of compact material (2), whereas the layer of foamed material (1) is not exposed to any heating action.

**7.** Process as claimed in one or more of the preceding claims, characterized in that, in combination with the differentiated compression of the areas (5) along the peripheral edges and along the edges of eventual interior apertures and/or with the differentiated heating (6, 7) to higher temperatures in the said areas (5), there is also provided the finishing cut of the said edges, preferably occurring substantially at the same time as the application of the two layers (1, 2) onto each other, and as the compaction of the areas (5) along the peripheral edges and/or along the edges of interior apertures.

**8.** Process as claimed in claim 7, characterized in that the cutting means (204, 403, 8, 9) for trimming the edges may be also heated, and said means may consist of shearing blades with continuous or saw-edged knife and counter-knife, or of die cutting punches, eventually also heated, and with different punch configurations, either continuous, or saw-edged.

**9.** Process as claimed in one or more of the preceding claims, characterized in that the compaction of the foamed material (1) in the strips (5), is progressive from an inner point, in which it substantially equals zero, whereas it increases towards the outside, until it reaches the highest values at the free peripheral edge or at the edge of an interior aperture of the panel.

**10.** Process as claimed in claim 9, wherein the progression with which the compaction of the foam layer (1) in the strip (5) along the peripheral edges of the panel or along the edges of interior apertures thereof increases from a zero value or minimum, to the highest value, is preferably non linear, but substantially quadratic, or logarithmic, the compaction increase being relatively rapid in the area of the inner half of the strip (5) along the edges of the panel, whereas the said compaction increase is substantially constant and asymptotic in the area of the outer half of the said strip (5).

**11.** Process as claimed in one or more of the preceding claims, characterized in that the materials for the compact layer (2) may be either based on vegetable and/or mineral fibers, or based on synthetic fibers and/or thermoplastic resins. The said fibers and the said materials being used either separately or in combination.

**13.** Process as claimed in claim 12, characterized in that the compact layer (2) is made of paper, crepe paper, woven or non-woven textiles, felts, mat, sheets of thermoplastic materials, either pure or filled with aggregate, such as wood flour, and/or talc, or similar, imitation leathers, or similar.

**14.** Process as claimed in claim 13, characterized in that the layer of compact material (2) is a thin sheet of thermoplastic resin, filled or not, particularly of polyolefin resin, especially of polypropylene.

**15.** Process as claimed in one or more of the preceding claims 11 to 14, characterized in that the layer of compact material may be composed of more coupled layers, there being provided an intermediate layer for supporting and/or anchoring the outer coating layer to the foam layer (1), the said supporting and/or anchor layer being made of a preferably coextruded film, or of a thin layer of foamed thermoplastic material.

**16.** Apparatus for manufacturing a composite panel made of thermoformable material according to the process as claimed in one or more of the preceding claims, the said apparatus comprising a mold (3) and a complementary counter mold (4) which are shaped according to the final shape of the composite panel, which substantially corresponds to the shape of the preformed layer of foamed material (1), the said mold and counter mold (3, 4) being made in such a way that, in the closing condition, they exert a compression of the preformed layer of foamed material (1) against the layer of compact material (2), being sufficient to provide coupling between the said two layers, but not to modify the characteristics of the foamed material, whereas at least the mold part (3), and/or also the counter mold part (4) have, in the areas or strips along the perimeter edges and/or along the edges of eventual interior apertures, means (203) to exert higher compression of the two layers (1, 2) onto each other.

**17.** Apparatus as claimed in claim 16, characterized in that the mold (3) and/or the counter mold (4) have, in coincidence with a strip of predetermined width, extending along the peripheral edges of the panel and/or along the edges of interior apertures thereof, protruding areas (203) being made to be so thick as to compress the two layers (1, 2) to a greater extent with respect to the remaining areas of the panel , and such as to compact the layer of foamed material (1) in the said strip (5).

**18.** Apparatus as claimed in claims 16 or 17, characterized in that the shaping of the mold and of the counter mold (3, 4) is such that, in the compressing position, the distance between the working surfaces (103, 104) of the mold and counter mold (3, 4) is slightly longer than the total thickness of the two superimposed layers, i.e. the layer of preshaped foamed material (1) and the layer of compact material (2), whereas, in the areas (5) along the peripheral edges and/or along the edges of eventual interior apertures, the distance between the mold and the counter mold is definitely shorter than the total thickness of the foamed material (1) and the layer of compact material (2).

**19.** Apparatus as claimed in one or more of the preceding claims 16 to 18, characterized in that the said protruding areas of the mold and/or of the counter mold (3, 4) are preferably shaped in such a way as to converge on each other, and are profiled in any way, even differently from each other towards the edge of the panel composed of the layers of foamed material (1) and of compact material (2), whereas in the area in which the distance is shorter, the two protruding portions of the mold and counter mold are at a distance which is in the same order of magnitude as the thickness of the compact material (2).

**20.** Apparatus as claimed in one or more of the preceding claims, characterized in that the protruding areas (203) of the mold and/or counter mold (3, 4), provided along the portions of the mold and/or counter mold coinciding with the outer peripheral edges or with the edges of interior apertures, are provided in portions (303) of the mold and counter mold, which are heated (6) and provided with independent heating means (6).

**21.** Apparatus as claimed in claim 20, chracterized in that the said heated portions (303) , carrying the protruding areas (203) for compacting the strips (5) along the peripheral edges or along the edges of interior apertures are thermally insulated (7) from the rest of the mold (3) and/or counter mold (4), which may be also heated or not, in combination with or independently from each other.

**22.** Apparatus as claimed in one or more of the preceding claims, characterized in that the portions (303) of the mold and/or counter mold (3, 4) corresponding to the areas (5) of the composite panel along its peripheral edges and/or along the edges of interior apertures, simultaneously carry means for trimming peripheral edges, or edges of eventual interior apertures, which may be shearing means (204, 403) or die cutting means (8, 9) and are automatically driven by closing the mold against the counter mold (3, 4).

**23.** Apparatus as claimed in claim 22, characterized in that the trimming means (204, 403, 8, 9) may be heated or not.

**24.** Apparatus as claimed in claims 22 or 23, characterized in that the blade of the knife or of the counter knife (403) consists of the outer peripheral edge of the compacting projection (203) of the mold (3) and/or of the counter mold (4).

**25.** Apparatus as claimed in one or more of the preceding claims, characterized in that the compacting projection (203) has a working surface facing the opposite surface of the counter mold and/or of the mold, which is inclined towards the said opposite surface as to converge from its innermost end towards its outer peripheral end, whereas the said working surface of the projection (203) has a profile which may be plane or arched, either concave or convex, or a profile composed of plane and/or arched lines, alternatively concave or convex, in such a way as to generate progressive compaction of the layer (1) of foamed material in the strip (5) along the peripheral edge or along the edge of apertures, increasing through a progression which may be linear or non linear, quadratic, exponential, logarithmic or else.

**26.** Apparatus as claimed in claim 26, characterized in that the working surface of the compacting projection (203) is made in the form of a convex arch, in such a way as to generate a rapid compaction increase, that is a rapid reduction of the overall thickness of the panel in one portion, preferably substantially in the inner half of the strip (5) of the panel, and a merely asymptotic increase in the other portion preferably substantially in the inner half of the strip (5).

**27.** Composite panel produced through the process and apparatus as claimed in one or more of the preceding claims, characterized in that it is composed of at least one layer of foamed thermoplastic material (1) and of at least one layer (2) of compact, that is non foamed thermoformable material, which two layers (1, 2) are coupled, the layer of foamed material (1) being compacted, in the area (5) of the panel along the peripheral edges or along the edges of eventual interior apertures, against the layer of non foamed material (2), in such a way as to substantially lose the typical characteristics of the foamed structure.

**28.** Panel as claimed in claim 27, charactrized in that, particularly along the peripheral edge, and/or along the edge of interior apertures, the total thickness of the panel varies from a maximum, which substantially corresponds to the total thickness of the foamed layer (1) and of the layer of compact material (2), to a minimum, whose order of magnitude is definitely smaller than that of the total thickness of the two layers (1, 2) and more or less substantially corresponds to the thickness of the layer of compact material (2).

**29.** Panel as claimed in one or more of the preceding claims, characterized in that along the peripheral edges, or along the edges of apertures, it is provided with a strip (5), in which the thickness of the panel is reduced from a maximum to a minimum thickness, with a countersunk progression, which may have any shape, preferably concave.

**30.** Process for manufacturing shaped, composite panels, apparatus for performing the process, and panel obtained through the said process, wholly or partially as decribed and illustrated and for the purposes stated above.
